# DEMANDE DE BREVET EUROPEEN

(11) **EP 4 570 598 A1**
(43) Date de publication de la demande: **18.06.2025**
(21) Numéro de dépôt: 24219691.3
(22) Date de dépôt: 13.12.2024
(51) Int. Cl.: B60R 19/18

(54) **DISPOSITIF ABSORBEUR DE CHOC PIÉTON D'UN VÉHICULE AUTOMOBILE**

(30) Priorité: 13.12.2023 FR 2314125
(71) Demandeur: Renault s.a.s, 92100 Boulogne Billancourt (FR)
(72) Inventeur: POULAIN DE LA FOSSE, Denis, 78280 GUYANCOURT (FR)

(57) **Abrégé**

L'invention concerne un dispositif (1) absorbeur de choc piéton d'un véhicule (2) automobile, adapté pour pouvoir être fixé en face avant (3) d'une traverse (4) d'extrémité avant de ce véhicule, la traverse (4) d'extrémité avant comportant au moins un passage (5) d'air traversant ladite traverse (4) d'extrémité avant et débouchant en face (3) avant et à l'arrière de ladite traverse (4),
caractérisé en ce que dispositif (1) absorbeur de choc piéton s'étend transversalement par rapport au véhicule (2) et ménage au moins un conduit (6) d'air traversant le dispositif (1) absorbeur de choc piéton et débouchant en face (8) avant et en face (9) arrière du dispositif (1) absorbeur de choc piéton, et en ce que au moins un conduit (6) d'air du dispositif (1) absorbeur de choc piéton présente un manchon (7) prolongeant ledit au moins un conduit (6) d'air en face arrière du dispositif (1) absorbeur de choc piéton, le manchon étant conformé pour pouvoir coopérer avec l'un des au moins un passage (5) d'air de la traverse (4) de façon à solidariser le dispositif (1) absorbeur de choc piéton et la traverse (4), permettre un passage d'air circulant entre la face (8) avant du dispositif (1) absorbeur de choc piéton et une face (10) arrière de la traverse (4) d'extrémité avant et diriger cette circulation d'air sur un radiateur (11) du véhicule (2) automobile

## Description

### Domaine technique

L'invention concerne un dispositif absorbeur de choc piéton d'un véhicule automobile. L'évolution constante des motorisations de véhicules, aussi bien thermiques qu'hybrides, nécessite de prévoir des moyens de refroidissement du groupe motopropulseur de ces véhicules dont l'efficacité doit être améliorée en conséquence. De telles motorisations nécessitent de multiplier les entrées d'air à l'avant des véhicules, ou d'en augmenter la surface.

### État de la technique antérieure

On connaît de FR2915933, un véhicule automobile dont la partie avant comprend un groupe motopropulseur alimenté en air au moyen d'un circuit d'alimentation en air comprenant un filtre à air et un col d'entrée d'air. Le véhicule automobile comprend aussi un pare-chocs avant dans lequel est logé un absorbeur de choc, aussi appelé absorbeur fémur, comprenant une pièce déformable et destiné à amortir l'impact du fémur d'un piéton, dans le cas d'une collision accidentelle du véhicule et du piéton. L'absorbeur de choc de FR2915933 s'étend transversalement et en partie haute du pare-chocs avant du véhicule. Dans FR2915933, le col d'entrée d'air est formé dans l'épaisseur de la pièce déformable et présente une forme allongée s'étendant dans une partie de longueur de la pièce déformable de l'absorbeur de choc s'étendant transversalement par rapport à l'axe longitudinal du véhicule. Ainsi, en cas de choc avant du véhicule avec un obstacle, notamment avec un piéton, le pare-chocs se déforme ainsi que la pièce déformable de l'absorbeur de choc, notamment du fait de la déformation facilitée du col d'entrée d'air par compression radiale. L'absorbeur de choc de FR2915933 et la déformation radiale du col d'entrée d'air en cas de choc intervenant en regard du col d'entrée d'air, contribuent à améliorer l'absorption de ce choc par l'absorbeur de choc et à limiter l'ampleur des séquelles physiques infligées à un piéton du fait de ce choc. Cela étant, ces avantages sont limités à un choc intervenant en regard du col d'entrée d'air qui s'étend sur une partie seulement de la pièce déformable de l'absorbeur de choc. Par ailleurs, ces avantages sont limités à un choc intervenant entre un obstacle, notamment un piéton, et une partie haute du pare-chocs avant d'un véhicule. Le dispositif absorbeur de choc de FR2915933 est essentiellement inopérant dans le cas d'un choc entre un piéton et une partie basse du pare-chocs du véhicule. En outre, ces avantages sont limités à un aménagement du col d'entrée d'air du circuit d'alimentation en air d'un groupe motopropulseur, le circuit d'alimentation en air comprenant en outre un filtre à air. Enfin, la déformation radiale et l'écrasement du col d'entrée d'air en cas de choc nécessite un remplacement de l'absorbeur de choc et du col de cygne endommagé pour l'alimentation en air du groupe motopropulseur.

L'invention vise à pallier l'ensemble de ces inconvénients.

L'invention vise en particulier à proposer un dispositif absorbeur de choc piéton pour véhicule automobile qui permettent d'améliorer l'absorption d'un choc intervenant entre une partie basse du pare-chocs avant du véhicule et un obstacle, notamment un piéton, en particulier une partie inférieure d'un membre inférieur du piéton.

L'invention vise également à proposer un dispositif absorbeur de choc piéton permettant d'optimiser le refroidissement par air du groupe motopropulseur du véhicule automobile en déplacement.

### Exposé de l'invention

L'invention vise un dispositif absorbeur d'un choc piéton -aussi nommé absorbeur piéton ou absorbeur d'un choc piéton avant ou absorbeur tibia- d'un véhicule automobile, adapté pour pouvoir être fixé en face avant d'une traverse d'extrémité avant de ce véhicule, ladite traverse comportant au moins un passage d'air traversant ladite traverse et débouchant en face avant et à en face arrière de ladite traverse,
caractérisé en ce que le dispositif absorbeur de choc piéton s'étend transversalement par rapport au véhicule et ménage au moins un conduit d'air traversant le dispositif absorbeur de choc piéton et débouchant en face avant et en face arrière du dispositif absorbeur de choc piéton, et en ce que au moins un conduit d'air du dispositif absorbeur de choc piéton présente un manchon prolongeant ledit au moins un conduit d'air en face arrière du dispositif absorbeur de choc piéton, le manchon étant conformé pour pouvoir coopérer avec l'un des au moins un passage d'air de la traverse de façon à solidariser le dispositif absorbeur de choc piéton et la traverse, permettre un passage d'air circulant entre la face avant du dispositif absorbeur de choc piéton et la face arrière de la traverse d'extrémité avant et diriger cette circulation d'air sur un radiateur du véhicule automobile.

Dans tout le texte :
- les termes « avant », « arrière », « droit(e) », « gauche », « haut » et « bas » sont à considérer par rapport à un véhicule en état normal de progresser,
- le repère XYZ renvoie à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut.

La traverse d'extrémité avant (dénommée également « traverse petit choc ») du véhicule est un élément structurel du véhicule. La traverse d'extrémité avant est une traverse métallique, s'étend à l'avant du véhicule et est montée solidaire à l'extrémité avant des longerons latéraux du véhicule et transversalement à ceux-ci. Une traverse d'extrémité avant connue de l'art antérieur est formée d'un profilé continu et exempt de passage d'air traversant.

Selon l'invention, la traverse d'extrémité avant présente au moins un passage d'air traversant ladite traverse et débouchant à l'avant et à l'arrière de ladite traverse. Selon l'invention, le(les) passage(s) d'air traversant ladite traverse d'extrémité avant permettent l'acheminement d'un flux d'air créé du fait de la progression du véhicule en direction du radiateur du véhicule. Ladite traverse d'extrémité avant selon l'invention comportant au moins un passage d'air traversant ladite traverse et débouchant à l'avant et à l'arrière de ladite traverse permet d'améliorer le refroidissement du groupe motopropulseur de ces véhicules, aussi bien thermiques qu'hybrides.

Selon certains modes de réalisation de l'invention, la traverse d'extrémité avant présentant au moins un passage d'air traversant et débouchant, est munie d'un dispositif absorbeur de choc piéton adapté pour pouvoir être fixé en face avant de ladite traverse.

Selon certains modes de réalisation de l'invention, le dispositif absorbeur de choc piéton ménage au moins un conduit d'air traversant le dispositif absorbeur de choc piéton et débouchant en face avant et en face arrière du dispositif absorbeur de choc piéton. Selon certains modes de réalisation de l'invention, au moins un conduit d'air du dispositif absorbeur de choc piéton présente un manchon prolongeant ledit au moins un conduit d'air axialement en face arrière du dispositif absorbeur de choc piéton. Selon certains modes de réalisation de l'invention, au moins un manchon présente une face interne de même section droite transversale, selon l'axe d'allongement du manchon, que la face interne du conduit qu'il prolonge. Rien n'empêche cependant qu'au moins un manchon présente une face interne de section droite transversale, selon l'axe d'allongement du manchon, distincte (en forme et dimension) de celle de la face interne du conduit qu'il prolonge.

Selon l'invention, le manchon est conformé et dimensionné pour pouvoir coopérer avec l'un des au moins un passage d'air de la traverse d'extrémité avant, par engagement dudit au moins un manchon dans ledit passage d'air. Par cet engagement, le dispositif absorbeur de choc piéton est fixé à la traverse d'extrémité avant. Selon l'invention, le manchon coopère par friction de la face externe du manchon et de la face interne du passage d'air, ce par quoi le dispositif absorbeur de choc piéton et la traverse d'extrémité avant sont solidarisés. La coopération du manchon et du passage d'air de la traverse d'extrémité avant permet un pré-assemblage du dispositif absorbeur de choc piéton et de la traverse facilitant les opérations de positionnement du dispositif absorbeur de choc piéton par rapport à la traverse et leur assemblage définitif ultérieur.

Selon l'invention, cette solidarisation est obtenue sans diminution sensible d'un flux d'air entrant à l'avant du véhicule et permet en outre de diriger le flux d'air sur le radiateur du véhicule.

Selon certains modes de réalisation, le manchon coopère sur toute sa longueur avec un passage d'air de la traverse d'extrémité avant. Rien n'empêche cependant de prévoir que le manchon ne coopère avec un passage de la traverse d'extrémité avant que sur une partie seulement de la longueur du manchon. Rien n'empêche non plus de prévoir que le manchon coopère avec une partie de longueur seulement du passage de la traverse d'extrémité avant.

Selon certains modes de réalisation, au moins un -notamment chaque- conduit d'air du dispositif absorbeur de choc piéton est de forme tubulaire rectiligne. Selon ces modes de réalisation avantageux, chaque conduit d'air du dispositif absorbeur de choc piéton est exempt de chicane susceptible de s'opposer au flux d'air traversant le dispositif absorbeur de choc piéton et la traverse d'extrémité avant.

Selon certains modes de réalisation, au moins un -notamment chaque- conduit d'air du dispositif absorbeur de choc piéton est de forme tubulaire rectiligne et de section droite transversale par rapport à un axe d'allongement dudit au moins un conduit d'air, choisie parmi une section polygonale -notamment une section rectangulaire ou carrée- et une section circulaire. De préférence, au moins un - notamment chaque- conduit d'air du dispositif absorbeur de choc piéton est de forme tubulaire rectiligne et de section droite transversale rectangulaire.

Selon certains de ces modes de réalisation, l'axe d'allongement d'au moins un conduit d'air est incliné par rapport à un axe longitudinal du véhicule, sécant à l'axe d'allongement dudit au moins un conduit d'air, d'une valeur d'angle (α) comprise entre 10° et 30°. Selon la position en hauteur du dispositif absorbeur de choc piéton par rapport au radiateur du véhicule, le conduit d'air peut être incliné vers le bas, par exemple si le dispositif absorbeur de choc piéton s'étend en partie haute par rapport au radiateur. Mais le conduit d'air peut être incliné vers le haut, par exemple si le dispositif absorbeur de choc piéton s'étend en partie plus basse par rapport au radiateur. Selon ces modes de réalisation, l'inclinaison du conduit d'air permet une déformation ou un écrasement facilité du dispositif absorbeur de choc piéton lors d'un choc, notamment lors d'un choc frontal, entre le véhicule et un obstacle, notamment un piéton. Il en résulte une absorption des contraintes dues au choc qui sont améliorées. Selon ces modes de réalisation, l'inclinaison du conduit d'air permet une augmentation du taux d'écrasement du dispositif absorbeur de choc piéton, notamment lors d'un choc avec un piéton, et un écrasement progressif selon l'intensité du choc. Le dispositif absorbeur de choc piéton permet donc de piloter l'écrasement selon l'intensité du choc. En particulier, s'agissant d'un choc d'une forte intensité, les zones du dispositif absorbeur de choc piéton ne présentant pas de conduit d'air assurent principalement l'absorption du choc. S'agissant d'un choc d'une faible intensité, les zones du dispositif absorbeur de choc piéton présentant un conduit d'air assurent principalement l'absorption du choc. S'agissant d'un choc RCAR normalisé par les compagnies d'assurance, provoqué à une vitesse de 16 km/h, les zones du dispositif absorbeur de choc piéton présentant un conduit d'air et celles n'en présentant pas assurent en combinaison l'absorption du choc.

Avantageusement, selon ces modes de réalisation, l'inclinaison du conduit d'air - notamment l'inclinaison du conduit d'air vers le haut- permet un masquage visuel du radiateur pour une tierce personne faisant face au véhicule. L'avantage est donc aussi esthétique. La qualité esthétique du véhicule perçue par le public est donc améliorée.

Selon certains modes de réalisation, le dispositif absorbeur de choc piéton est formé en au moins un matériau thermoplastique, notamment un matériau thermoplastique choisi dans le groupe formé du polypropylène (PP) et du polypropylène expansé (PPE). Avantageusement, le matériau thermoplastique du dispositif absorbeur de choc piéton est choisi pour être déformable au choc dans une première course initiale du choc et pour être sensiblement incompressible dans une deuxième course finale du choc.

Selon certains modes de réalisation, le dispositif absorbeur de choc piéton présente une plus grande dimension sensiblement égale à la plus grande dimension de la traverse d'extrémité avant du véhicule, cette plus grande dimension s'étendant selon l'axe Y d'un repère orthonormé direct XYZ tel que défini à la norme N°0100112 lorsque le dispositif absorbeur est monté sur le véhicule.

Selon certains de ces modes de réalisation, le dispositif absorbeur de choc piéton présente une plus grande dimension comprise entre 800 mm et 1200 mm, notamment comprise entre 900 mm et 1100 mm, en particulier de l'ordre de 1000 mm.

Selon certains modes de réalisation, le dispositif absorbeur de choc piéton présente une hauteur comprise entre 100 mm et 140 mm, notamment comprise entre 110 mm et 130 mm, en particulier de l'ordre de 120 mm, cette hauteur s'étendant selon l'axe Z d'un repère orthonormé direct XYZ tel que défini à la norme N°0100112 lorsque le dispositif absorbeur est monté sur le véhicule.

Selon certains modes de réalisation, le dispositif absorbeur de choc piéton présente une épaisseur comprise entre 60 mm et 100 mm, notamment comprise entre 70 mm et 90 mm, en particulier de l'ordre de 80 mm, cette épaisseur s'étendant selon l'axe X d'un repère orthonormé direct XYZ tel que défini à la norme N°0100112 lorsque le dispositif absorbeur est monté sur le véhicule.

L'invention s'étend également à une traverse d'extrémité avant présentant au moins un passage d'air traversant ladite traverse et débouchant à l'avant et à l'arrière de ladite traverse d'extrémité avant. Selon l'invention, le(les) passage(s) d'air traversant ladite traverse d'extrémité avant permettent l'acheminement d'un flux d'air créé du fait de la progression du véhicule en direction du radiateur du véhicule. Ladite traverse d'extrémité avant selon l'invention comportant au moins un passage d'air traversant ladite traverse et débouchant à l'avant et à l'arrière de ladite traverse permet d'améliorer le refroidissement du groupe motopropulseur de ces véhicules, aussi bien thermiques qu'hybrides.

Selon certains modes de réalisation, une traverse selon l'invention est adaptée pour pouvoir recevoir et coopérer avec un dispositif absorbeur de choc piéton de ce véhicule automobile, le dispositif absorbeur de choc piéton étant adapté pour pouvoir être fixé en face avant de la traverse d'extrémité avant de ce véhicule, caractérisé en ce que,
le dispositif absorbeur de choc piéton s'étend transversalement par rapport au véhicule et ménage au moins un conduit d'air traversant le dispositif absorbeur de choc piéton et débouchant en face avant et en face arrière du dispositif absorbeur de choc piéton, et en ce que
au moins un conduit d'air du dispositif absorbeur de choc piéton présente un manchon prolongeant ledit au moins un conduit d'air en face arrière du dispositif absorbeur de choc piéton, le manchon étant conformé pour pouvoir coopérer avec l'un des au moins un passage d'air de la traverse de façon à solidariser le dispositif absorbeur de choc piéton et la traverse, permettre un passage d'air circulant entre la face avant du dispositif absorbeur de choc piéton et une face arrière de la traverse d'extrémité avant et diriger cette circulation d'air sur un radiateur du véhicule automobile.

L'invention s'étend également à un véhicule automobile équipé d'un dispositif absorbeur de choc piéton selon l'invention et/ou d'une traverse d'extrémité avant selon l'invention.

### Description des dessins

D'autres caractéristiques et avantages de l'invention apparaîtront encore à la lecture de la description qui va suivre. Celle-ci est purement illustrative et doit être lue en regard des dessins annexés sur lesquels :
[Fig. 1] est une représentation schématique éclatée d'un absorbeur de choc piéton selon l'invention coopérant avec une traverse d'extrémité avant d'un véhicule automobile ;
[Fig. 2] est une représentation schématique en coupe transversale d'un premier mode de réalisation d'un ensemble formé d'un dispositif absorbeur de choc piéton et d'une traverse d'extrémité avant d'un véhicule automobile ;
[Fig. 3] est une représentation schématique en coupe transversale d'un deuxième mode de réalisation d'un ensemble formé d'un dispositif absorbeur de choc piéton et d'une traverse d'extrémité avant d'un véhicule automobile ;
[Fig. 4] est une représentation schématique en coupe transversale d'un dispositif absorbeur de choc piéton dans un premier état avant la survenue d'un choc et dans un deuxième état après la survenue d'un choc ;
[Fig. 5] est une représentation schématique en coupe longitudinale selon un plan vertical comprenant les axes X et Z, d'une partie avant d'un véhicule automobile comprenant un ensemble de refroidissement transversal, le véhicule automobile étant équipé d'un dispositif absorbeur de choc piéton selon l'invention.

### Description des modes de réalisation

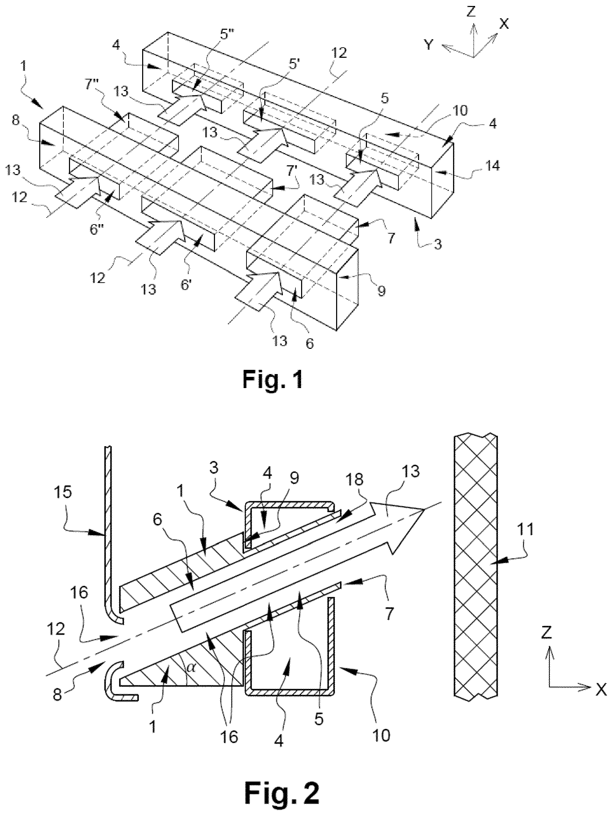

La vue schématique en mode éclatée représentée en figure 1 comprend une traverse 4 d'extrémité d'avant d'un véhicule (non représenté). La traverse 4 d'extrémité avant est formée d'un profilé métallique rigide. Chaque extrémité 14 longitudinale de la traverse 4 d'extrémité avant est montée solidaire de l'une des extrémités longitudinales avant des longerons (non représentés) du véhicule. Les deux extrémités 14 longitudinales de la traverse 4 forment, en face arrière 10 de la traverse 4, des pièces d'écrasement, s'étendant dans le prolongement des longerons, aux extrémités longitudinales avant des longerons. Les pièces d'écrasement sont adaptées pour pouvoir s'écraser longitudinalement (selon l'axe X du véhicule) et sont disposées pour pouvoir préserver l'intégrité des longerons lors d'un choc.

La traverse 4 d'extrémité axiale représentée comprend trois passages 5,5',5" traversant la traverse 4 d'extrémité avant et débouchant sur la face 3 avant et sur la face de la traverse adaptés et dimensionnés pour pouvoir coopérer chacune avec un manchon 7,7',7" creux prolongeant chaque conduit 6,6',6" traversant d'avant en arrière le dispositif 1 absorbeur de choc piéton selon l'invention. Selon l'invention, les passages 5,5',5" traversant la traverse 4 d'extrémité avant sont conformés et dimensions pour recevoir chacun l'un des manchons 7,7',7" du dispositif 1 absorbeur de choc piéton et pour solidariser le dispositif 1 absorbeur de choc piéton et la traverse 4 d'extrémité avant par simple engagement relatif de l'un dans l'autre. Le dispositif 1 absorbeur de choc piéton est formé en au moins un matériau thermoplastique, notamment un matériau thermoplastique choisi dans le groupe formé du polypropylène (PP) et du polypropylène expansé (PPE). Le matériau thermoplastique du dispositif absorbeur de choc piéton est déformable au choc dans une première course initiale du choc, mais également pour être sensiblement incompressible dans une deuxième course finale du choc.

Les conduits 6,6',6" formés traversant le dispositif 1 absorbeur de choc piéton d'avant en arrière et les manchons 7,7',7" coopérant avec les passages 5,5',5" traversant la traverse 4 d'extrémité avant permettent une entrée d'air 13 atmosphérique à l'avant du véhicule et un guidage de cet air 13 atmosphérique vers l'arrière de la traverse 4 d'extrémité avant et vers radiateur du véhicule automobile.

La vue schématique en coupe transversale d'un premier mode d'assemblage d'un dispositif 1 absorbeur de choc piéton et d'une traverse 4 d'extrémité avant représentée est représentée en figure 2. Cette vue est une vue en coupe dans un plan passant par un conduit 6,6',6" et par un passage 5,5',5 » » de la traverse d'extrémité axiale. Dans ce premier mode d'assemblage, le dispositif 1 absorbeur de choc piéton présente un conduit 6, prolongé par un manchon 7. Le manchon 7 est dimensionné pour s'étendre sur tour la longueur du passage 5 de la traverse 4 d'extrémité axiale. Rien n'empêche cependant de prévoir que le manchon 7 présente une longueur supérieure ou légèrement inférieure à la longueur du passage 5. Cela étant, le dispositif 1 absorbeur de choc piéton et la traverse 4 d'extrémité avant sont solidaires. La coopération du(des) manchon(s) du dispositif 1 absorbeur de choc piéton et du(des) passages de la traverse 4 d'extrémité avant permet un pré-assemblage du dispositif 1 absorbeur de coc et de la traverse 4 d'extrémité. Ce pré-assemblage facilite le montage ultérieur de ces deux éléments. Dans le mode de réalisation représenté, le conduit 6 traversant le dispositif 1 absorbeur de choc piéton, le manchon 7 prolongeant le conduit 6 et le passage 5 traversant la traverse 4 d'extrémité avant sont coaxiaux selon un axe 13 d'allongement du conduit 6, du manchon7 et du passage 5 et forment un canal 16 de guidage d'air atmosphérique de même axe 13 d'allongement. Selon ce mode de réalisation, le canal 16 s'étend entre une entrée 17 avant pratiquée dans une peau 15 du véhicule 2, formant un bouclier et une sortie 18 arrière d'air dirigée sur un radiateur 11 du véhicule 2 automobile.

Dans le mode de réalisation représenté, l'axe 12 d'allongement du canal 16 de guidage d'air est incliné par rapport à l'axe longitudinal du véhicule, sécant à l'axe 12 d'allongement du canal 16 de guidage d'air. Dans ce mode de réalisation, l'entrée d'air et son orientation vers le radiateur du véhicule est améliorée et l'aspect esthétique du véhicule est préservé dès lors que l'orientation de l'axe 12 est d'allongement du canal 16 de guidage d'air ne coïncide pas avec l'axe de vision d'un individu regardant le véhicule.

En outre, compte tenu de cette inclinaison, l'épaisseur apparente (selon l'axe X du véhicule) de matériau formant le dispositif 1 absorbeur de choc piéton est réduite du fait des conduits 6,6',6" ménagés et la survenue d'un choc à l'avant du véhicule avec un piéton, selon un axe parallèle à l'axe X d'allongement du véhicule permet une déformation facilitée du dispositif 1 absorbeur de choc piéton et une amélioration de l'absorption du choc.

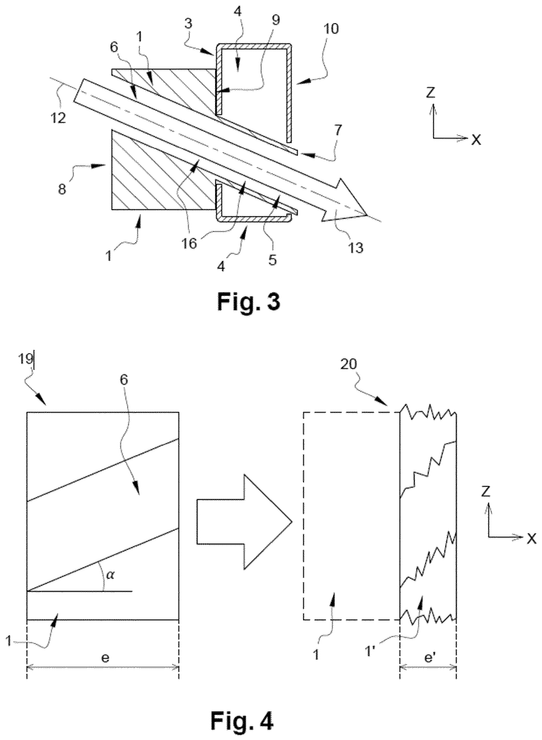

Dans le mode de réalisation représenté en figure 3, l'axe 12 d'allongement du canal 16 de guidage d'air est incliné par rapport à l'axe longitudinal du véhicule, sécant à l'axe 12 d'allongement du canal 16 de guidage d'air. Dans ce mode de réalisation, l'entrée d'air et son orientation vers le radiateur du véhicule est améliorée. Dans ce mode de réalisation, l'axe 12 d'allongement du canal 16 de guidage d'air est incliné vers le bas par rapport à l'axe longitudinal du véhicule. Le manchon 7 du dispositif 1 absorbeur de choc piéton coopère avec le passage 5 d'air traversant la traverse 4 d'extrémité avant de sorte que le dispositif 1 absorbeur de choc piéton est maintenu dans un état préassemblé avec la traverse 4 d'extrémité avant du fait de la gravité. Un assemblage final du dispositif 1 absorbeur de choc piéton et de la traverse 4 d'extrémité avant est facilité du fait de cet coopération.

En outre, compte tenu de cette inclinaison, l'épaisseur apparente (selon l'axe X du véhicule) de matériau formant le dispositif 1 absorbeur de choc piéton est réduite du fait des conduits 6,6',6" ménagés et la survenue d'un choc à l'avant du véhicule avec un piéton, selon un axe parallèle à l'axe X d'allongement du véhicule permet une déformation facilitée du dispositif 1 absorbeur de choc piéton et une amélioration de l'absorption du choc.

La figure 4 est une illustration schématique d'un dispositif 1 absorbeur de choc piéton en coupe transversale dans un premier état 19 avant la survenue d'un choc et dans un deuxième état 20 après la survenue d'un choc. Le dispositif 1 absorbeur de choc piéton selon l'invention, dans un premier état 19 avant une survenue d'un choc est tel que représenté en figure 2. Dans ce premier état 19, le dispositif 1 absorbeur de choc piéton présente une épaisseur (e) selon l'axe d'allongement X du véhicule. Dans le deuxième état 20 après la survenue d'un choc, le dispositif 1' absorbeur de choc écrasé présente une épaisseur (e' < e) selon l'axe d'allongement X du véhicule. L'épaisseur (e' < e) est non nulle et est représentative d'une limite de compressibilité du dispositif 1 absorbeur de choc piéton selon l'invention, atteinte lors de la survenue du choc.

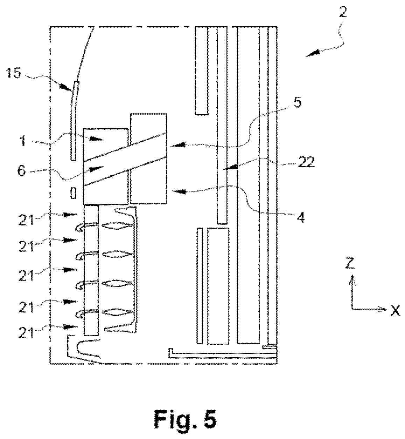

La partie avant du véhicule 2 automobile représentée schématiquement en figure 5 est équipée d'un dispositif 1 absorbeur de choc piéton présentant un conduit 6 d'air traversant le dispositif 1 absorbeur de choc piéton et débouchant à l'avant et à l'arrière du dispositif 1 absorbeur de choc piéton. Le dispositif 1 absorbeur de choc piéton est disposé au-dessus d'une pluralité d'entrées 21 d'air inférieures. Il débouche en partie inférieure d'une peau 15 du véhicule 2, ladite peau 15 formant un bouclier. Le dispositif 1 absorbeur de choc piéton a pour effet d'augmenter la surface efficace d'entrée d'air à l'avant du véhicule 2 automobile. Le conduit 6 d'air du dispositif 1 absorbeur de choc piéton coopère avec un passage 5 d'air traversant la traverse 4 d'extrémité avant de façon à diriger un flux d'air additionnel en direction d'un ensemble de refroidissement transversal comprenant une valise 22 de refroidissement du véhicule 2 automobile. Le refroidissement du groupe motopropulseur du véhicule 2 automobile est amélioré sans altération de la qualité esthétique du véhicule 2 perçue par le public.

## Revendications

1. Dispositif (1) absorbeur de choc piéton d'un véhicule (2)
automobile, adapté pour pouvoir être fixé en face (3) avant d'une traverse (4) d'extrémité avant de ce véhicule, ladite traverse (4) d'extrémité avant comportant au moins un passage (5,5',5") d'air traversant ladite traverse (4) d'extrémité avant et débouchant en face (3) avant et en face (10) arrière de ladite traverse (4),
**caractérisé en ce que** dispositif (1) absorbeur de choc piéton s'étend transversalement par rapport au véhicule (2) et ménage au moins un conduit (6,6',6") d'air traversant le dispositif (1) absorbeur de choc piéton et débouchant en face (8) avant et en face (9) arrière du dispositif (1) absorbeur de choc piéton, et **en ce que**
au moins un conduit (6) d'air du dispositif (1) absorbeur de choc piéton présente un manchon (7,7',7") prolongeant ledit au moins un conduit (6,6',6") d'air en face (9) arrière du dispositif (1) absorbeur de choc piéton, le manchon (7,7',7") étant conformé pour pouvoir coopérer avec l'un des au moins un passage (5,5',5") d'air de la traverse (4) de façon à solidariser le dispositif (1) absorbeur de choc piéton et la traverse (4), permettre un passage d'air circulant entre la face (8) avant du dispositif (1) absorbeur de choc piéton et la face (10) arrière de la traverse (4) d'extrémité avant et diriger cette circulation d'air (13) sur un radiateur (11) du véhicule (2) automobile.

2. Dispositif (1) absorbeur de choc piéton selon la revendication 1, **caractérisé en ce qu'**au moins un notamment chaque conduit (6) d'air du dispositif (1) absorbeur de choc piéton est de forme tubulaire rectiligne.

3. Dispositif (1) absorbeur de choc piéton selon l'une des revendications 1 ou 2, **caractérisé en ce qu'**au moins un -notamment chaque-conduit (6,6',6") d'air du dispositif (1) absorbeur de choc piéton est de forme tubulaire rectiligne et de section droite transversale par rapport à un axe (12) d'allongement dudit au moins un conduit (6) d'air, choisie parmi une section polygonale -notamment une section rectangulaire ou carrée- et une section circulaire.

4. Dispositif (1) absorbeur de choc piéton selon la revendication 3, **caractérisé en ce que** l'axe (12) d'allongement d'au moins un conduit (6) d'air est incliné par rapport à un axe longitudinal du véhicule, sécant à l'axe (12) d'allongement dudit au moins un conduit (6) d'air, d'une valeur d'angle (α) comprise entre 10° et 30°.

5. Dispositif (1) absorbeur de choc piéton selon l'une des revendications 1 à 4, **caractérisé en ce qu'**il est formé en un matériau choisi dans le groupe formé du polypropylène (PP) et du polypropylène expansé (PPE),

6. Dispositif (1) absorbeur de choc piéton selon l'une des revendications 1 à 5, **caractérisé en ce qu'**il présente une plus grande dimension sensiblement égale à la plus grande dimension de la traverse extrême avant du véhicule.

7. Dispositif (1) absorbeur de choc piéton selon l'une des revendications 1 à 6, **caractérisé en ce qu'**il présente une plus grande dimension comprise entre 800 mm et 1200 mm, notamment comprise entre 900 mm et 1100 mm, en particulier de l'ordre de 1000 mm.

8. Dispositif (1) absorbeur de choc piéton selon l'une des revendications 1 à 7, **caractérisé en ce qu'**il présente une hauteur comprise entre 100 mm et 140 mm, notamment comprise entre 110 mm et 130 mm, en particulier de l'ordre de 120 mm.

9. Dispositif (1) absorbeur de choc piéton selon l'une des revendications 1 à 8, **caractérisé en ce qu'**il présente une épaisseur comprise entre 60 mm et 100 mm, notamment comprise entre 70 mm et 90 mm, en particulier de l'ordre de 80 mm.

10. Traverse (4) d'extrémité avant pour véhicule (2) automobile, **caractérisée en ce qu'**elle comporte au moins un passage (5) d'air traversant ladite traverse (4) d'extrémité avant et débouchant en face (3) avant et en face (13) arrière de ladite traverse (4) d'extrémité avant.

11. Traverse (4) d'extrémité avant pour véhicule (2)
automobile selon la revendication 10, **caractérisée en ce qu'**elle est adaptée pour pouvoir recevoir et coopérer avec un dispositif (1) absorbeur de choc piéton de ce véhicule (2) automobile, le dispositif (1) absorbeur de choc piéton étant adapté pour pouvoir être fixé en face (3) avant de la traverse (4) d'extrémité avant de ce véhicule, **caractérisé en ce que**,
le dispositif (1) absorbeur de choc piéton s'étend transversalement par rapport au véhicule (2) et ménage au moins un conduit (6) d'air traversant le dispositif (1) absorbeur de choc piéton et débouchant en face (8) avant et en face (9) arrière du dispositif (1) absorbeur de choc piéton, et **en ce que**
au moins un conduit (6) d'air du dispositif (1) absorbeur de choc piéton présente un manchon (7) prolongeant ledit au moins un conduit (6) d'air en face (9) arrière du dispositif (1) absorbeur de choc piéton, le manchon (9) étant conformé pour pouvoir coopérer avec l'un des au moins un passage (5) d'air de la traverse (4) de façon à solidariser le dispositif (1) absorbeur de choc piéton et la traverse (4), permettre un passage d'air circulant entre la face (8) avant du dispositif (1) absorbeur de choc piéton et une face (10) arrière de la traverse (4) d'extrémité avant et diriger cette circulation d'air sur un radiateur (11) du véhicule (2) automobile.

12. Véhicule (2) automobile équipé d'un dispositif (1) absorbeur de choc piéton selon l'une des revendications 1 à 9.

13. Véhicule (2) automobile équipé d'une traverse (4) d'extrémité avant selon l'une des revendications 10 ou 11.
